(19) **Europäisches Patentamt**

**European Patent Office**

**Office européen des brevets**

(11) **EP 0 613 773 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.⁷: **B32B 27/32**

(21) Anmeldenummer: **94102561.1**

(22) Anmeldetag: **21.02.1994**

(54) **Weiss-opake Sperrschichtfolie mit ausgezeichneter Planlage**

White opaque barrier film with good planarity

Film barrière blanc opaque avec bonne planéité

(84) Benannte Vertragsstaaten:
**AT BE CH DE DK ES FR GB IT LI NL SE**

(30) Priorität: **05.03.1993 DE 4306963**

(43) Veröffentlichungstag der Anmeldung:
**07.09.1994 Patentblatt 1994/36**

(73) Patentinhaber: **WOLFF WALSRODE AKTIENGESELLSCHAFT
29699 Walsrode (DE)**

(72) Erfinder:
• **Bochow, Richarda, Dipl.-Ing.
D-29683 Fallingsbostel (DE)**
• **Tamke, Heiko, Dipl.-Ing. Dr.
D-29664 Walsrode (DE)**
• **Hammerschmidt, Karl
D-29664 Walsrode (DE)**

(74) Vertreter: **Pettrich, Klaus-Günter, Dr. et al
c/o Bayer AG,
Konzernbereich RP
Patente und Lizenzen
51368 Leverkusen (DE)**

(56) Entgegenhaltungen:
**EP-A- 0 208 075          EP-A- 0 258 020
EP-A- 0 388 086          DE-A- 3 624 543
US-A- 4 698 261**

## Beschreibung

Die vorliegende Erfindung betrifft eine weiß-opake Verbundfolie mit hohem Weißgrad und guter Deckkraft und hoher Sperrwirkung gegen Wasserdampf und Gase, die sich durch besonders gute Planlage auszeichnet.

Die Verwendung von mehrschichtigen Verbundfolien für die Verpackung von besonders empfindlichen Füllgütern, z.B. von Lebensmitteln, die durch Sauerstoff oxidativ verändert werden können, ist seit langem bekannt. Die Verpackung dieser Güter erfolgt üblicherweise unter Vakuum oder unter Schutzgas. Für diesen Einsatz muß die Umhüllung entsprechend gasdicht sein.

Es ist Stand der Technik, hierfür Verbundfolien zu verwenden, die eine Aluminiumschicht, eine PVDC-Lakkierung oder eine Polyamid-Außenschicht aufweisen. Diese Folien sind gegebenenfalls empfindlich gegen Knickbruch oder zeigen bei Feuchtigkeitsaufnahme Rollneigung.

Werden aus optischen Gründen weiße Verpackungsfolien benutzt, ist es üblich, eine oder mehrere Folienschichten weiß zu pigmentieren oder zu bedrucken oder weiß-opake biaxial gereckte Polypropylenfolien einzusetzen. Ein höherer Weißgrad wird gegebenenfalls durch eine dunkle Hinterlegung wie eine Metallbedampfung, eine Aluminiumfolie oder eine eingefärbte Schicht erzielt. Diese Laminate sind dann nur einseitig weiß. Eine solche Verbundfolie aus einer metallbedampften Polyesterfolie und einer weiß-opaken Polypropylenfolie ist aus der europäischen Patentschrift 0 199 288 B1 bekannt. Diese Folie besitzt gute Barriereeigenschaften und eine gute Planlage, ist aber nicht für Verpackungen geeignet, die hohe Nahtfestigkeiten fordern und hat nur eine weiße Seite.

In der Lebensmittelindustrie besteht jedoch die Forderung nach metallfreien beidseitig weißen Verbundfolien mit hoher Barrierewirkung, die gewährleisten, daß daraus gefertigte Packungen bei der Präsentation dauerhaft ihre Form behalten.

Es stellt sich daher die Aufgabe, eine verbesserte Verbundfolie zu entwickeln, die

einen hohen Weißgrad und eine hohe Deckkraft,
eine gute Barriere gegen Wasserdampf und Gase,
eine gute Planlage auch bei wechselndem Raumklima,
eine hohe Steifheit und
eine begrenzte Tiefziehbarkeit

aufweist.

Erfindungsgemäß gelang dies durch die Herstellung einer Verbundfolie gemäß dem Vorliegenden Anspruch 1.

Die biaxial gereckte weiß-opake Polypropylenfolie A ist vorzugsweise eine dreibis fünfschichtige Folie. Die Kernschicht dieser Folie besteht aus einem Polypropylen-Homopolymer, in der durch die Zugabe von organischem oder anorganischem Füllstoff während des Reckprozesses Vakuolen entstehen, die zu einem opaken Aussehen führen. Die äußeren Schichten bestehen vorzugsweise aus einem Polypropylen-Copolymer. Gegebenenfalls befinden sich zwischen der Kernschicht und den Siegelschichten Schichten aus Polypropylen mit Titandioxid eingefärbt.

Die Heißsiegelschicht D besteht aus einem Polyolefin oder einem amorphen Polyester.

Besonders bevorzugte Polyolefine sind:

Polyethylenhomo- und Polyethylencopolymere, z.B.

| | |
|---|---|
| LLDPE = | Linear Low Density Polyethylen |
| PB = | Polybutylen |
| EVA = | Ethylenvinylacetat |
| EBA = | Ethylenbutylacrylat |
| EAA = | Ethylenacrylsäure |
| EEA = | Ethylenethylacrylat |
| EMAA = | Ethylenmethacrylsäure |
| I = | Ionomer |

und Mischungen bzw. Coextrusionen dieser Stoffe.

Besonders bevorzugte amorphe Polyester sind:
Polyethylenterephthalat-Homo- bzw. Copolymere, die eine verringerte Kristallisationsneigung zeigen. Die Kristallisationsneigung von Polyethylenterephthalat wird z.B. durch das Einpolymerisieren von Comonomeren wie Isophthalsäure oder 1,4-Cyclohexan-dimethanol (CHDM) reduziert.

Weiterhin bevorzugt für den Einsatz als Heißsiegelschicht sind amorphe, schlagzäh modifizierte, überwiegend aus Polyethylenterephthalat-Homo- bzw. Copolymer bestehende Materialien, die sich dadurch auszeichnen, daß der Sekantenmodul von Folien aus diesem Stoff maximal 1800 N/mm$^2$ beträgt.

Die Heißsiegelschicht ist festversiegelnd oder abziehfähig gegen eine zweite Folie ausgeführt.

Die oben genannten Folien A, C und D sind in einer bevorzugten Ausführungsform mit den jeweils benachbarten Schichten über eine Klebeschicht B verbunden. Für eine Klebeschicht wird ein Reaktivklebstoff wie z.B. ein Ein- oder Zwei-Komponenten-Polyurethanklebstoff oder ein polyolefinischer Haftvermittler wie z.B. Polyethylenhomopolymer, EAA oder EMAA verwendet.

Gegebenenfalls können zwei Schichten auch ohne Klebeschicht verbunden werden, z.B. durch Extrusionsbeschichtung der mittleren Schicht mit einer Heißsiegelschicht.

Die einzelnen Schichten weisen vorzugsweise folgende Dicken auf:

| Schicht A | 25 - 75 μm |
| Schicht B | 0,1 - 20 μm |
| Schicht C | 10 - 30 μm |
| Schicht D | 15 - 150 μm |

Die Verbundfolie kann in den einzelnen Schichten mit üblichen Additiven und Hilfsmitteln wie z.B. mit Gleitmitteln, Antiblockmitteln, Antistatika, $TiO_2$ und $CaCO_3$ ausgerüstet sein.

Es hat sich überraschend herausgestellt, daß durch den besonderen Aufbau der beschriebenen Folie ein Druck auf der Barriereschicht C einen besonders hohen Weißgrad erhält. Das Druckbild ist dann durch die Siegelschicht D lesbar. Zusätzlich gestattet die hohe Deckkraft der Folie A einen Frontaldruck auf die Außenseite des Verbundes, der das rückseitige Druckbild unbeeinflußt läßt.

Außerdem wird durch die außenliegende Folie A und die innenliegende Folie D, die eine hohe Wasserdampfsperre besitzen, die gegebenenfalls feuchtigkeitsempfindliche Barrierefolie C gegen Feuchtigkeitsaufnahme geschützt. Dadurch bleibt die hohe Sauerstoffbarriere dieser Folie unabhängig vom Außenklima erhalten.

Weiterhin wird durch diese spezielle Folienanordnung eine Rollneigung durch Anquellen der gegebenenfalls feuchtigkeitsempfindlichen Schicht C vermieden und eine hohe Steifigkeit des Verbundes erzielt.

Überraschenderweise ist dieser Verbund auf üblichen Tiefziehautomaten verformbar. Dabei bleibt die Weißkraft des Verbundes erhalten.

Meßmethoden

Die Eigenschaften der Mehrschichtfolie gemäß der vorliegenden Erfindung werden nach den folgenden Methoden bestimmt: Die Sauerstoffdurchlässigkeit der Folien wird nach DIN 53 380, Teil 3, bestimmt.

Die Wasserdampfdurchlässigkeit der Folien wird nach DIN 53 122 bestimmt.

Der Weißgrad der Folien wird nach Berger bestimmt und ist definiert als

$$\text{Weißgrad nach Berger} = R_y + 3 R_z - 3 R_x,$$

wobei $R_x$, $R_z$ und $R_y$ die Reflexionswerte bei den unterschiedlichen Normfarben darstellen. Die Messungen wurden mit dem Gerät ElrephoMat DFC 5 der Fa. Zeiss, Oberkochen, durchgeführt.

**Beispiele**

**Beispiel 1**

Eine Verbundfolie gemäß der Erfindung wird durch folgenden Schichtenaufbau beschrieben:

| Schicht A (Außenschicht) | Biaxial gereckte weiß-opake Polypropylenfolie, fünfschichtig, 40 μm |
| Schicht B1 | Zwei-Komponenten-Polyurethanklebstoff, 2 μm |
| Schicht C | Gasbarriereschicht aus Coextrudat Polyamid 6/Ethylenvinylalkohol-Copolymer/ Polyamid 6, monoaxial gereckt, 15 μm, gekontert bedruckt |
| Schicht B2 | Zwei-Komponenten-Polyurethanklebstoff, 2 μm |
| Schicht D (Innenschicht) | Siegelschicht aus Ethylenvinylacetat-Copolymer, 3,5 % Vinylacetat, 75 μm |

Die Schicht A besteht aus einer Kernschicht aus Polypropylen-Homopolymer und 15 Gew.-% $CaCO_3$, zwei Schichten aus Polypropylen-Homopolymer mit 10 Gew.-% $TiO_2$ sowie zwei Außenschichten aus einem Propylen/Ethylen-Copolymer (ca. 4 Gew.-% Ethylen-Anteil).

### Beispiel 2

| Schicht A (Außenschicht) | Biaxial gereckte weiß-opake Polypropylenfolie, fünfschichtig, 40 µm, frontal bedruckt |
|---|---|
| Schicht B1 | Zwei-Komponenten-Polyurethanklebstoff, 2 µm |
| Schicht C | Gasbarriereschicht aus Coextrudat, Polyamid 6/Ethylenvinylalkohol-Copolymer/Polyamid 6, monoaxial gereckt, 15 µm, gekontert bedruckt |
| Schicht B2 | Zwei-Komponenten-Polyurethanklebstoff, 2 µm |
| Schicht D (Innenschicht) | Siegelschicht aus Coextrudat, Polyethylen-Homopolymer/Blend aus Polyethylen-Homopolymer und Polybutylen, 50 µm, abziehfähig gegen eine zweite Folie |

### Beispiel 3

| Schicht A (Außenschicht) | Biaxial gereckte weiß-opake Polypropylenfolie, fünfschichtig, 40 µm |
|---|---|
| Schicht B1 | Zwei-Komponenten-Polyurethanklebstoff, 2 µm |
| Schicht C | Gasbarriereschicht aus Polyvinylalkohol, biaxial gereckt, 12 µm, Typ Bovlon EX der Fa. Nippon Gohsei, Japan |
| Schicht B | Extrusionsprimer auf Polyiminbasis, 0,1 µm |
| Schicht D (Innenschicht) | Siegelschicht aus Polyethylen-Homopolymer, 40 µm |

### Beispiel 4

| Schicht A (Außenschicht) | Biaxial gereckte weiß-opake Polypropylenfolie, fünfschichtig, 40 µm |
|---|---|
| Schicht B1 | Zwei-Komponenten-Polyurethanklebstoff, 2 µm |
| Schicht C | Gasbarriereschicht aus Polyvinylalkohol, biaxial gereckt, 12 µm, Typ Bovlon EX der Fa. Nippon Gohsei, Japan |
| Schicht B2 | Zwei-Komponenten-Polyurethanklebstoff, 2 µm |
| Schicht D (Innenschicht) | Siegelschicht aus amorphem Polyethylenterephtalat, 20 µm, schlagzäh-modifiziert, Typ Selar PT 4234 der Fa. Du Pont der Nemours |

### Vergleichsbeispiel 1

| Schicht A (Außenschicht) | Biaxial gereckte Polyethylenterephthalatfolie, 12 µm, gekontert bedruckt |
|---|---|
| Schicht B1 | Zwei-Komponenten-Polyurethanklebstoff, 2 µm |
| Schicht C | Barriereschicht aus Aluminiumfolie, 9 µm |
| Schicht B2 | Zwei-Komponenten-Polyurethanklebstoff, 2 µm |
| Schicht D (Innenschicht) | Siegelschicht aus Polyethylen-Homopolymer, 70 µm |

### Vergleichsbeispiel 2

| Schicht A (Außenschicht) | Barriereschicht aus Zellglas XS, 22 µm, beidseitig PVDC-lackiert, gekontert bedruckt |
|---|---|
| Schicht B1 | Zwei-Komponenten-Polyurethanklebstoff, 2 µm |
| Schicht D (Innenschicht) | Siegelschicht aus Polyethylen-Homopolymer, 60 µm, weiß eingefärbt |

**Vergleich der Eigenschaften verschiedener Verbundfolien**

(Beispiele 1 bis 4 und Vergleichsbeispiele 1 und 2)

| | Beispiel 1 | Beispiel 2 | Beispiel 3 | Beispiel 4 | Vergleichs-beispiel 1 | Vergleichs-beispiel 2 |
|---|---|---|---|---|---|---|
| Schicht A | BOPP opak | BOPP opak, frontal bedruckt | BOPP opak, frontal bedruckt zwischen den Schichten | BOPP opak | PETP, gekontert bedruckt | Zellglas XS, gekontert bedruckt |
| Schicht B1 | 2K-Polyurethan-Klebstoff | 2K-Polyurethan-Klebstoff | 2K-Polyurethan-Klebstoff | 2K-Polyurethan-Klebstoff | 2K-Polyurethan-Klebstoff | 2K-Polyurethan-Klebstoff |
| Schicht C | PA6/EVOH/PA6 monoaxial gereckt, gekontert bedruckt | PA6/EVOH/PA6 monoaxial gereckt, gekontert bedruckt | PVOH, biaxial gereckt | PVOH, biaxial gereckt | Aluminium | |
| Schicht B2 | 2K-Polyurethan-Klebstoff | 2K-Polyurethan-Klebstoff | Polyimin-Primer | 2K-Polyurethan-Klebstoff | 2K-Polyurethan-Klebstoff | |
| Schicht D | EVA-Copolymer | Peel gegen LDPE | LPDE | PETP, schlagzäh-modifiziert | LDPE | LDPE, weiß eingefärbt |

EP 0 613 773 B1

| | Beispiel 1 | Beispiel 2 | Beispiel 3 | Beispiel 4 | Vergleichs-beispiel 1 | Vergleichs-beispiel 2 |
|---|---|---|---|---|---|---|
| Sauerstoff-durchlässig-keit (23°C, 0 % rel. Feuchte) | 1,5 cm3 / (m$^2$ d bar) | 1,5 cm3 / (m$^2$ d bar) | <1,0 cm3 / (m$^2$ d bar) | <1,0 cm3 / (m$^2$ d bar) | nicht meßbar gering | 8,0 cm3 / (m$^2$ d bar) |
| Wasser-dampfdurch-lässigkeit (23°C, 85 % rel. Feuchte) | <1,0 g/ (m$^2$ d) | <1,0 g/ (m$^2$ d) | <1,0 g/ (m$^2$ d) | 1,2 g/ (m$^2$ d) | nicht meßbar gering | 1,0 g/ (m$^2$ d) |
| Weißgrad nach Berger | 79 % (gemessen durch EVA) | 81 % (gemessen auf BOPP opak) | 80 % (gemessen durch LDPE) | 81 % (gemessen auf BOPP opak) | 71 % (gemessen durch PETP auf Druckfarbe) | 68 % (gemessen durch Zellglas auf Druckfarbe) |

Die in der Tabelle verwendeten Abkürzungen für die Verbundkomponenten werden durch die vorhergehenden Beschreibungen erklärt.

EP 0 613 773 B1

**Patentansprüche**

1.  Mehrschichtige Verbundfolie, bestehend aus Deckschicht A, Gas-Barriereschicht C, Heißsiegelschicht D sowie gegebenenfalls notwendigen Klebe- bzw. Verbindungsschichten B, dadurch gekennzeichnet, daß die einzelnen Schichten in der Verbundfolie wie folgt angeordnet sind:

    A eine biaxial gereckte weiß-opake Polypropylenfolie,

    B gegebenenfalls eine Klebe- oder Verbindungsschicht,

    C eine Gas-Barriereschicht, die eine Sauerstoffdurchlässigkeit von höchstens 30 Ncm$^3$/m$^2$ d bar (23°C/0 % r. F.) aufweist und aus Polyvinylalkohol oder Polyethylenterepthhalat besteht und gegebenenfalls monoaxial oder biaxial verstreckt ist und gegebenenfalls mit einer Sperrschichtlackierung bzw. transparenten Sperrschichtbedampfung versehen ist oder aus der schichtweisen Kombination von PA und EVOH oder aus monoaxial verstrecktem Polyamid oder monoaxial verstreckten Mischungen von PA und EVOH besteht,

    B gegebenenfalls eine Klebe- oder Verbindungsschicht,

    D eine Heißsiegelschicht,

    wobei gegebenenfalls die Schichten A und C gegeneinander austauschbar sind.

2.  Mehrschichtige Verbundfolie gemäß Anspruch 1, dadurch gekennzeichnet, daß die Deckschicht A eine biaxial gereckte, weiß-opake Polypropylen-Folie ist, die mindestens dreischichtig ist.

3.  Mehrschichtige Verbundfolie gemäß einem der Ansprüche 1 oder 2, dadurch gekennzeichnet, daß die Heißsiegelschicht D überwiegend aus einem Polyolefin-Homo- bzw. Polyolefin-Copolymer und Mischungen bzw. Coextrusionen dieser Stoffe oder aus einem amorphen Polyethylenterephthalat-Homo- bzw. Copolymer besteht.

4.  Mehrschichtige Verbundfolie gemäß einem der Ansprüche 1 oder 2, dadurch gekennzeichnet, daß die Heißsiegelschicht aus einem amorphen, schlagzäh modifizierten, überwiegend aus Polyethylenterephthalat-Homo- bzw. Copolymer bestehenden Material gefertigt wird, das sich dadurch auszeichnet, daß der Sekantenmodul von Folien aus diesem Stoff maximal 1800 N/mm$^2$ beträgt.

5.  Mehrschichtige Verbundfolie gemäß Anspruch 3 und 4, dadurch gekennzeichnet, daß die Heißsiegelschicht festversiegelnd oder abziehfähig gegen eine zweite Folie ausgeführt ist.

6.  Mehrschichtige Verbundfolie gemäß einem der Ansprüche 1 bis 5, dadurch gekennzeichnet, daß die oben genannten Folien A, C, D mit den jeweils benachbarten Schichten über eine Klebeschicht aus Zwei-Komponenten-Polyurethanklebstoff bzw. einem polyolefinischen Haftvermittler verbunden sind.

7.  Mehrschichtige Verbundfolie gemäß einem der Ansprüche 1 bis 5, dadurch gekennzeichnet, daß die Heißsiegelschicht D gegebenenfalls ohne Klebeschicht durch Extrusionsbeschichtung mit der Nachbarschicht verbunden ist.

8.  Mehrschichtige Verbundfolie gemäß einem der Ansprüche 1 bis 7, dadurch gekennzeichnet, daß die Verbundfolie bedruckt ist.

9.  Verwendung der mehrschichtigen Verbundfolie gemäß einem der Ansprüche 1 bis 8 zur Verpackung von Lebensmitteln.

**Claims**

1.  A multilayer composite film consisting of an outer layer A, a gas barrier layer C, a heat sealing layer D and of adhesive or bonding layers B which may be necessary, characterised in that the individual layers are arranged as follows in the composite film:

    A a biaxially stretched, white opaque polypropylene film,

B optionally an adhesive or bonding layer,

C a gas barrier layer, which has a permeability to oxygen of 30 Ncm$^3$/m$^2$ d bar at most (23°C/0 % relative humidity), and which consists of polyvinyl alcohol or polyethylene terephthalate and which is optionally monoaxially or biaxially drawn and is optionally provided with a barrier layer lacquer coating or a transparent vapour-deposited barrier layer coating, or which consists of a combination of PA and EVOH in layers or of a monoaxially drawn polyamide or of monoaxially drawn mixtures of PA and EVOH,

B optionally an adhesive or bonding layer,

D a heat sealing layer,

wherein layers A and C are optionally interchangeable.

2. A multilayer composite film according to claim 1, characterised in that the outer layer A is a biaxially stretched, white opaque polypropylene film which comprises at least three layers.

3. A multilayer composite film according to either one of claims 1 or 2, characterised in that the heat sealing layer D predominantly consists of a polyolefine homopolymer or a polyolefine copolymer and mixtures or co-extrusions of these materials, or of an amorphous polyethylene terephthalate homo- or copolymer.

4. A multilayer composite film according to either one of claims 1 or 2, characterised in that the heat sealing layer is made of an amorphous, impact-resistant modified material which predominantly consists of a polyethylene terephthalate homo- or copolymer and which is distinguished in that the maximum secant modulus of films made of this material is 1800 N/mm$^2$.

5. A multilayer composite film according to claims 3 and 4, characterised in that the heat sealing layer is designed so that it is sealed fixedly to or can be peeled off from a second film.

6. A multilayer composite film according to any one of claims 1 to 5, characterised in that the aforementioned films A, C and D are each bonded to their adjacent layers via an adhesive layer comprising a two-component polyurethane adhesive or a polyolefine bonding agent.

7. A multilayer composite film according to any one of claims 1 to 5, characterised in that the heat sealing layer D is optionally bonded to the adjacent layer without an adhesive layer by extrusion coating.

8. A multilayer composite film according to any of claims 1 to 7, characterised in that the composite film is printed.

9. The use of the multilayer composite film according to any one of claims 1 to 8 for the packaging of foods.

**Revendications**

1. Feuille composite multicouche constituée par une couche de recouvrement A, une couche d'arrêt des gaz C, une couche thermosoudable D, ainsi que, le cas échéant, des couches adhésives, respectivement de liaison requises B, caractérisée en ce que les couches individuelles dans la feuille composite sont disposées comme suit:

A une feuille de polypropylène opaque blanche soumise à un étirage biaxe,
B le cas échéant, une couche adhésive ou de liaison,
C une couche d'arrêt des gaz qui présente une perméabilité à l'oxygène au maximum de 30 Ncm$^3$/m$^2$ d bar (23°C/0 % d'humidité relative) et qui est constituée d'alcool polyvinylique ou de polyéthylène-téréphtalate et qui, le cas échéant, a été soumise à un étirage monoaxe ou biaxe et qui, le cas échéant, est munie d'une couche de laque faisant office de couche d'arrêt, respectivement d'une couche transparente déposée par métallisation au vide faisant office de couche d'arrêt, ou bien qui est constituée par la combinaison stratifiée de PA et de EVOH ou par du polyamide soumis à un étirage monoaxe ou encore par des mélanges de PA et de EVOH soumis à un étirage monoaxe,
B le cas échéant, une couche adhésive ou une couche de liaison,
D une couche thermosoudable,

les couches A et C pouvant le cas échéant être échangées l'une l'autre.

2. Feuille composite multicouche selon la revendication 1, caractérisée en ce que la couche de recouvrement A est une feuille de polypropylène opaque blanche soumise à un étirage biaxe qui comporte au moins trois couches.

3. Feuille composite multicouche selon l'une quelconque des revendications 1 ou 2, caractérisée en ce que la couche thermosoudable D est constituée principalement par un homopolymère de polyoléfine, respectivement par un copolymère de polyoléfine et par des mélanges, respectivement des coextrusions de ces substances ou encore par un homopolymère, respectivement un copolymère amorphe de polyéthylène-téréphtalate.

4. Feuille composite multicouche selon l'une quelconque des revendications 1 ou 2, caractérisée en ce que la couche thermosoudable est réalisée à partir d'une matière amorphe, modifiée pour lui conférer une résistance élevée aux chocs, constituée principalement par un homopolymère, respectivement par un copolymère de polyéthylène-téréphtalate, ladite matière étant caractérisée en ce que le module de sécante des feuilles constituées de cette substance s'élève au maximum à 1800 N/mm$^2$.

5. Feuille composite multicouche selon les revendications 3 et 4, caractérisée en ce que la couche thermosoudable est réalisée de façon à être soudée à demeure à une seconde feuille ou de façon à pouvoir être pelliculée par rapport à cette seconde feuille.

6. Feuille composite multicouche selon l'une quelconque des revendications 1 à 5, caractérisée en ce que les feuilles A, C, D mentionnées ci-dessus sont reliées avec les couches respectivement voisines via une couche adhésive constituée par de la colle de polyuréthanne à deux composants, respectivement par un agent adhésif polyoléfinique.

7. Feuille composite multicouche selon l'une quelconque des revendications 1 à 5, caractérisée en ce que la couche thermosoudable est reliée à la couche voisine le cas échéant en l'absence d'une couche adhésive par couchage par extrusion.

8. Feuille composite multicouche selon l'une quelconque des revendications 1 à 7, caractérisée en ce que la feuille composite est imprimée.

9. Utilisation de la feuille composite multicouche selon l'une quelconque des revendications 1 à 8 pour le conditionnement de denrées alimentaires.